# EUROPEAN PATENT SPECIFICATION

(11) **EP 3 668 697 B1**
(45) Date of publication and mention of the grant of the patent: **12.05.2021**
(21) Application number: 17755488.8
(22) Date of filing: 18.08.2017
(51) Int. Cl.: B29C 49/36, B29C 49/42, B29C 49/78

(54) **SPEED ADAPTATION SYSTEM AND METHOD IN A COMBINED CONTAINER PROCESSING PLANT**
SYSTEM UND VERFAHREN ZUR GESCHWINDIGKEITSANPASSUNG IN EINER KOMBINIERTEN CONTAINERVERARBEITUNGSANLAGE
SYSTÈME ET PROCÉDÉ D'ADAPTATION DE VITESSE DANS UNE INSTALLATION DE TRAITEMENT COMBINÉ DE RÉCIPIENT

(43) Date of publication of application: 24.06.2020
(73) Proprietor: Sidel Participations, 76930 Octeville-sur-Mer (FR)
(72) Inventor: SORBI, Federica, 43126 Parma (IT); PETIT, Fabian, 76930 Octeville-sur-Mer (FR)
(74) Representative: Sidel Group
(86) International application number: PCT/EP2017/070968
(87) International publication number: WO 2019/034266

(56) References cited:
- EP-A1- 2 735 538
- WO-A2-2006/097796
- DE-A1-102006 059 001

## Description

The present invention relates to a speed adaptation system and method in a combined container processing plant.

In particular, the following discussion will make reference, without this implying any loss of generality, to a combined bottling plant for packaging fluid products in plastic bottles or similar containers, and to the adaptation of the speed of rotation of at least two machines of the combined bottling plant, in particular a blowing (or blow moulding) machine used for the formation of containers, by stretch blow moulding of heated preforms made e.g. of thermoplastic material, and a filling machine for filling the formed containers with a filling product, e.g. a food product like a CSD (Carbonated Soft Drink) .

As it is known, a combined bottling plant includes a number of cooperating processing machines, performing a number of respective processing operations, such as (but not limited to) blowing, filling, sterilising, labelling and capping of containers, e.g. plastic bottles.

Each processing machine generally includes a respective rotating wheel (or carousel), carrying along its periphery a number of processing units performing processing operations on a respective number of containers.

The various processing machines are arranged in a desired operating sequence, at a close distance one with respect to the other, and conveying or transfer assemblies, each including a number of transfer star wheels or analogous conveying elements (such as conveyor belts or conveyor chains), allow transfer of the containers between the various processing machines, through the required operating sequence.

During operation, the rotary motions of two or more machines in the processing plant, e.g. the blowing and filling machines, are synchronized, kinematically coupled or constrained one to the other, meaning that the machines are operatively coupled to operate in synchronization with respect to their rotary position around a respective axis of rotation and their speed of rotation, expressed as the number of containers processed per unit of time.

However, while some processing machines are required to always operate at a same processing speed, e.g. the blowing machine (for example, since the time interval in which the containers are to be guided through an heating module of the same blowing machine is predetermined, based on the characteristics of the containers), other processing machines may be required to operate at different speeds, under certain operating conditions.

For example, it is known that the filling product has to be supplied to the carousel of the filling machine at a predetermined temperature (e.g. 18°C); in particular, the stability of a carbonated product, such as a CDS, is directly linked to the product temperature.

If, for any reason (e.g. due to the stop of the processing plant because of a fault identified in one or more of the processing machines), the filling product stays in the carousel and the environment temperature is higher than the product temperature, the temperature of the product in the carousel's pipes tends to increase. If the product temperature increases, the filling product becomes more instable and this can lead to foam formation and unwanted loss of carbonation during filling of the containers.

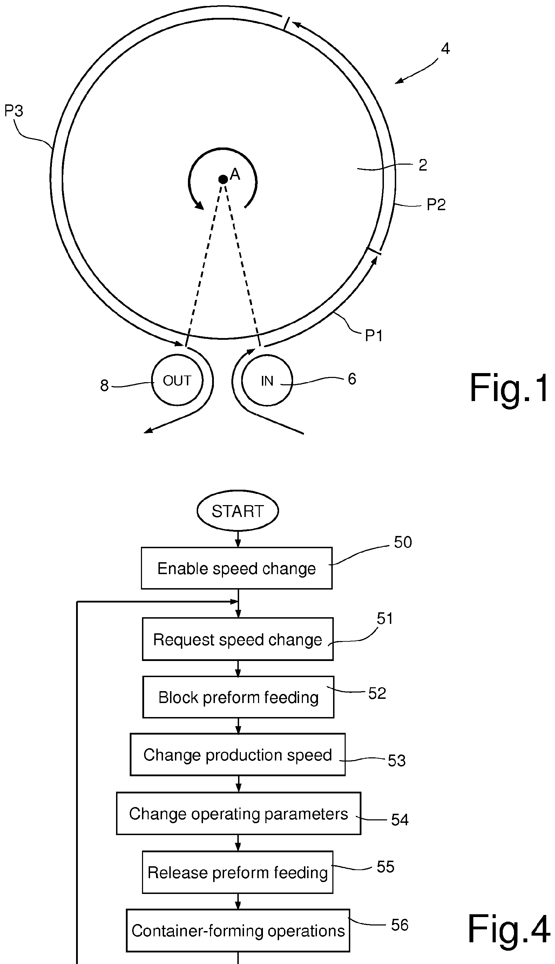

Figure 1 schematically shows the rotating wheel 2 of a filling machine 4 in a container processing plant.

Containers, supplied to the rotating wheel 2 of the filling machine 4 from an input transfer wheel 6, are carried by the rotating wheel 2 at the periphery thereof along a processing path, during rotation of the same rotating wheel 2 around an axis A, while filling operations are performed on the same containers by respective filling units (here not shown) according to a filling recipe.

In particular, in a first portion P1 of the processing path, containers undergo a pressurization phase of the recipe, and corresponding pressurization operations are performed thereon by the respective filling units; then, in a second portion P2 of the processing path P, the same containers undergo a filling phase, and corresponding filling operations are performed thereon by the respective filling units; and in a third portion P3 of the processing path P, the containers undergo a depressurization phase and corresponding depressurization operations are performed thereon by the respective filling units.

The containers are then transferred to an output transfer wheel 8, in order to be carried towards another processing machine of the container processing plant (e.g. a labelling or capping machine, arranged downstream of the filling machine).

To limit the above discussed undesired effect of the product temperature increase, the last phase of the filling recipe (i.e. the decompression phase) has to be maintained for a longer time, so that the containers may stay longer in the third portion P3 of the processing path P. Therefore, the rotation speed of the filling machine 4 has to be decreased and brought from a normal (or full) operating speed to a reduced operating speed, lower than the normal operating speed.

There are also other operating conditions, where it may be desirable to reduce the rotation speed of a filling machine in a container processing plant.

For example, suitable sensors, such as imaging sensors, may be provided at the output of the filling machine, in order to detect foam formation in the filled containers. In case anomalous foam formation is detected, it is required to reduce the operating speed of the filling machine, to avoid further foam formation.

As previously discussed, the rotation speed of the filling machine is, however, constrained to the rotation speed of the blowing machine, so that slowing of the filling machine entails a corresponding decrease of the rotation speed of the blowing machine.

Known solutions therefore envisage the following steps to be performed, whenever a decrease of the rotation speed of the filling machine is required due to the operating conditions:
a batch (i.e. a discrete group of a predetermined number) of preforms is caused to enter the blowing machine;
the preforms are blown at the rotation speed of the blowing machine, i.e. at full operating speed;
just before the batch of formed containers enter the filling machine, the production rotation speed is reduced;
the containers are filled in the filling machine at the reduced rotation speed, so as to avoid the discussed product stability issues; and
after the filled containers of the batch exit the filling machine, the production rotation speed is again increased, so as to blow a next batch of preforms.

This sequence of steps is then repeated a number of times, until the operating conditions allow again filling operations to be performed at the full operating speed, e.g. until the product's temperature in the filling carousel's pipes has decreased to an acceptable value.

The above sequence of steps entails complex and time consuming operations, in particular due to the processing of containers in batch, i.e. in groups of a limited number.

Moreover, these steps are generally executed under control of an operator and may therefore be liable to errors that may lead to decrease of the product quality or waste of poorly filled containers.

EP 2 125 583 B1 discloses a combined bottle processing system where a sequence of steps generally corresponding to the above discussed solution is instead automated, i.e. performed under supervision of a system control unit.

Document EP2735583A1 may also be helpful for understanding the invention.

However, also this solution entails the problems previously underlined, concerning the complexity and time expenditure of the batch-processing operations.

The need is therefore felt for a solution allowing to achieve a more efficient speed adaptation between the machines in a combined container-processing plant.

The aim of the present invention is consequently to address the above need, and in particular to provide an improved solution for adapting the rotation speed of different machines in a container-processing plant, in particular a container-forming machine and a container-filling machine.

According to the present invention, a combined container-processing plant and a corresponding method of operation are consequently provided, as defined in the annexed claims.

For a better understanding of the present invention, preferred embodiments thereof are now described, purely by way of a non-limiting example, with reference to the attached drawings, wherein:
- Figure 1 shows a diagrammatic depiction of a known filling machine in a combined bottling plant for formation and filling of containers;
- Figure 2 is a schematic block diagram of a container-processing plant provided with a speed-adaptation system;
- Figure 3 is a plot of signals related to the speed-adaptation system;
- Figure 4 is a flow diagram of operations performed according to a speed-adaptation method; and
- Figure 5 is a plot of signals related to the speed-adaptation system, in a different operating condition.

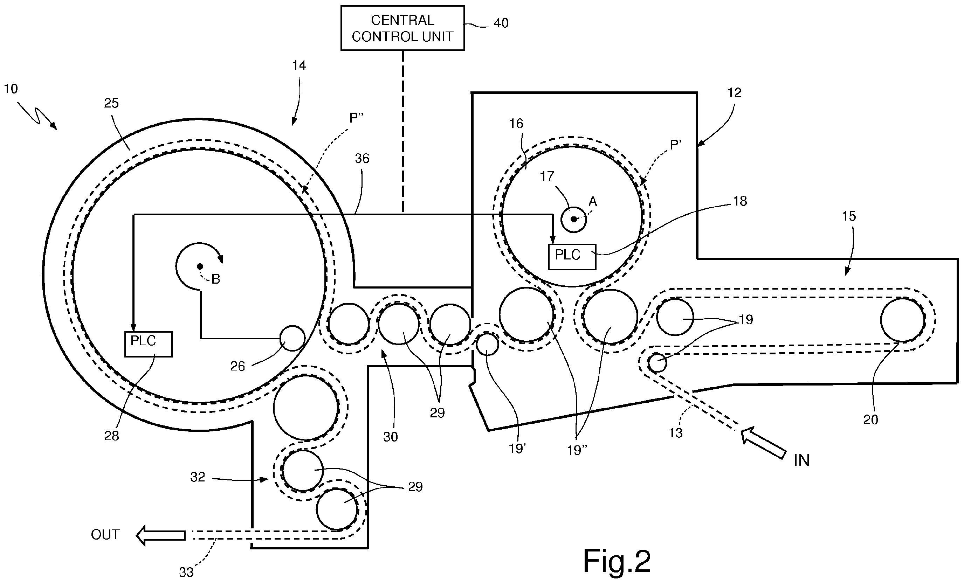

Figure 2 schematically shows a combined container-processing plant 10, including: a first container-processing machine, in particular a blowing machine 12, which receives at its input preforms and provides at its output formed containers, e.g. bottles; and at least a second container-processing machine, in particular a filling machine 14, which is arranged downstream of the blowing machine 12, receives at its input the formed containers from the blowing machine 12, fills the containers with a liquid product, e.g. a CSD, according to a desired filling recipe, and outputs the filled containers making them available for successive processing steps (e.g. for sterilizing, labelling and/or capping operations by respective further processing machines of the same container-processing plant 10, here not shown).

The blowing machine 12 receives the preforms from an input line 13 and comprises an heating module, e.g. an oven 15, configured to heat the preforms, and a main rotating wheel (or carousel) 16, designed to perform stretch-blowing operations on the heated preforms, for formation of the containers.

The main rotating wheel 16 defines a circular processing path P' for the preforms/containers being processed, which are carried at its periphery, and includes an electric motor 17, for example an asynchronous motor, which is coupled to a physical shaft and is controlled to drive the rotating motion of the same main rotating wheel 16 around a first axis A.

The blowing machine 12 includes a main control unit 18, including a PLC (Programmable Logic Controller) or similar computing unit, programmed to control the electric motor 17 to cause the rotation of the main rotating wheel 16 and to control the container-forming operations (i.e. the heating and blowing operations).

The blowing machine 12 further includes: at least an input wheel 19, designed to receive the preforms from the input line 13; a conveyor assembly 20, receiving the preforms from the input wheel 19 and transporting the same preforms into, and through, the oven 15; at least an output wheel 19', designed to provide the formed containers to an outlet of the blowing machine 12, for transferring the formed containers from the upstream blowing machine 12 to the downstream filling machine 14; and a number of transfer wheels (or star wheels) 19", each rotating around a respective axis of rotation and carrying the articles (preforms/formed containers) to be transferred along their periphery, in particular from the oven 15 to the main rotating wheel 16, and from the same main rotating wheel 16 to the output wheel 19'.

In a manner here not shown, input and output wheels 19, 19' may also be selectively configurable in order to define alternative paths for the articles to be transferred to and/or from accumulation reservoirs or discharge paths.

In a substantially corresponding manner, filling machine 14 comprises: a respective main rotating wheel 25, defining a respective circular processing path P" for the containers being processed and carrying along its periphery a number of processing units (here not shown), each performing processing (i.e. filling) operations on a respective container; a main electric motor 26, in particular a brushless motor, which is coupled to the main rotating wheel 25 and is controlled to drive the rotating motion of the same main rotating wheel 25 around a respective rotation axis B; and a control unit 28, including a PLC (Programmable Logic Controller) or similar computing unit, operatively coupled to the main electric motor 26 and programmed to control the container-processing operations, according to a desired plan or recipe.

The filling machine 14 further comprises a number of transfer wheels (or star wheels) 29, each rotating around a respective axis of rotation and carrying the containers to be transferred along their periphery.

In particular, a number of input transfer wheels 29 define an inlet conveyor assembly 30, receiving the formed containers from the blowing machine 12; and a number of output transfer wheels 29 define an outlet conveyor assembly 32, for transferring the filled containers to an outlet line 33 (and possibly to downstream processing machines, here not shown, such as a capping machine or a labelling machine).

During operation, the rotary motions of the blowing and filling machines 12, 14 are synchronized, or constrained one to the other; in particular, their rotation speeds are matched, and the blowing and filling machines 12, 14 rotate at a same rotation speed.

In a possible embodiment, the main control unit 28 of the filling machine 14 is coupled to the main control unit 18 of the blowing machine 12 via a digital communication bus 36, for example a field bus, operating with an Ethernet protocol, e.g. the Powerlink protocol, arranged and configured to transfer digital signals between the blower machine 12 and the filler machine 14, e.g. according to a master/slave operating relation (the main control unit 18 of the blowing machine 12 acting as "master" and the main control unit 28 of the filling machine 14 acting as "slave").

Moreover, both main control units 18, 28 of the blowing and filling machines 12, 14 may be coupled (via a physical or wireless communication link) to a central control unit 40 of the combined container-processing plant 10, which supervise the general operation of the same combined container-processing plant 10.

Main control unit 18 of the blowing machine 12 includes a memory 18', where operating parameters of the same blowing machine 12 are stored, in particular heating parameters for the oven 15, e.g. a heating temperature of respective heating lamps and/or a number of active heating lamps.

According to a particular aspect of the present solution, for each possible container format or type that is to be formed, at least two different sets of operating parameters are stored, for respective, different, rotation speeds at which the blowing machine 12 may operate. Each set of operating parameters defines a respective heating recipe for the formation of the containers.

Thus, the blowing machine 12 according to the present solution is able to operate, i.e. to perform the container formation operations, at (at least) two different operating speeds, and in particular at a full, or normal, operating speed, and at a reduced operating speed, e.g. equal to 80% of the full operating speed.

For example, the operating parameters associated to the reduced operating speed may envisage a decreased heating temperature, or a decreased number of active heating lamps of the oven 15, to compensate for an increased time of permanence of the preforms in the same oven 15.

Accordingly, whenever a reduction of the rotation speed of the filling machine 14 is required (e.g. due to an increased temperature of the filling product, or due to detection of foam in the filled containers, as previously discussed), the main control unit 18 of the blowing machine 12 may automatically adapt its operating parameters (and the heating recipe) and thus continue to perform the container-formation operations, continuously, even during operation at the reduced speed.

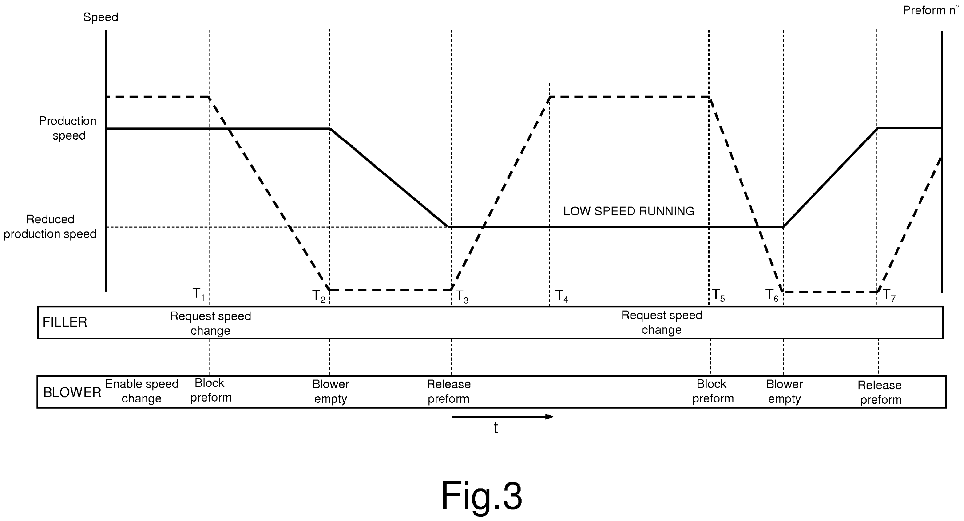

A speed adaptation solution implemented in the combined container processing plant 10 is now discussed in more details, with reference to Figure 3.

In particular, Figure 3 shows, with a continuous line, the plot versus time of the operating rotation speed, or production speed, i.e. the matched rotation speed of the blowing and filling machines 12, 14 in the combined container-processing plant 10; and with a dashed line, the plot versus time of the number of preforms supplied to the blowing machine 12 during operation.

Referring to the above plots, at time T1, a request of speed change is originated, e.g. from the filling machine 14; this request of speed change may be a request to modify the production speed from a full operating speed to a reduced operating speed, for example due to a detected temperature increase in the filling product, or due to detected foam in the filled containers.

This request of speed change is received by the main control unit 18 of the blowing machine 12, for example via the digital communication bus 36 (or may be received from the central control unit 40 of the combined container-processing plant 10); the same main control unit 18 reacts to the request, blocking feeding of the preforms to the oven 15 from the input line 13 starting from time T1.

Due to blocking of the preforms, the number of preforms in the oven 15 decreases from a maximum value (corresponding to a full blowing machine 12) and becomes zero at time T2, when the blowing machine 12 may be considered empty.

At the same time T2, the matched production speed of the blowing and filling machines 12, 14, controlled by both main control units 18, 28 of the same blowing and filling machine 12, 14, starts actual decrease from the full operating speed towards the reduced operating speed, which is reached (e.g. via a linear-slope decrease) at time T3.

Within the same time T3, the main control unit 18 of the blowing machine 12 retrieves from memory 18' the operating parameters associated to the reduced operating speed, and applies the same operating parameters (e.g. modifying the heating parameters defining the operation of the oven 15), automatically modifying the previously applied parameters.

It is noted that in the time interval between times T2 and T3 there are no preforms in the blowing machine 12, and no production of containers occur.

Next, at the same time T3, the main control unit 18 of the blowing machine 12 causes again release of the preforms, that thus enter the blowing machine 12 and particularly the oven 15, as a continuous and uninterrupted flow from the input line 13. The number of preforms in the blowing machine 12 thus raises again and reaches the maximum value, at time T4.

Starting from time T3, combined operation of the blowing machine 12 and the filling machine 14 thus occurs at the reduced production speed, with a continuous feed of preforms into the blowing machine 12 from the input line 13.

Operation at the reduced production speed continues, until a further request of speed change is originated, e.g. from the filling machine 14, this request of speed change being a request to modify the production speed from the reduced operating speed again to the full operating speed, for example due to a detected temperature in the filling product again reaching a normal temperature, or due to detected absence of undesired foam in the filled containers.

It is to be noted that the time interval during which operation of both the blowing machine 12 and the filling machine 14 occurs at the reduced speed is therefore not predetermined, but may vary according to the operating conditions. For example, in the case that the request of speed change was due to an increased temperature of the product in the filling pipes, three or four complete revolutions of the main rotating wheel 25 of the filling machine 14 may be required to consume the warm product in the filling pipes, so that the fresh product that is delivered to the filler's pipes may cool down again the whole system (and allow increase of the production speed up to the full speed).

The request of speed change is again received by the main control unit 18 of the blowing machine 12, for example via the digital communication bus 36 (or from the central control unit 40 of the combined container-processing plant 10); the same main control unit 18 reacts to this request, again blocking feeding of the preforms to the oven 15, at time T5.

Due to blocking of the preforms, the number of preforms in the oven 15 again decreases from the maximum value and becomes zero at time T6, when the blowing machine 12 is empty.

At the same time T6, the matched production speed of the blowing and filling machines 12, 14, controlled by both main control units 18, 28 of the same blowing and filling machines 12, 14, starts to increase from the reduced operating speed towards the full operating speed, which is again reached at time T7.

Within the same time T7, the main control unit 18 of the blowing machine 12 retrieves from memory 18' the operating parameters associated to the full operating speed, and applies the same operating parameters to operation of the same blowing machine 12.

Next, at the same time T7, the main control unit 18 of the blowing machine 12 causes release of the preforms, that thus enter the blowing machine 12 and particularly the oven 15, as a further continuous and uninterrupted flow. The number of preforms in the blowing machine 12 thus raises again until it reaches the maximum value (as it is not shown in Figure 3).

Starting from time T7, combined operation of the blowing machine 12 and the filling machine 14 thus occurs again at the full operating speed, with a continuous feed of preforms into the blowing machine 12 from the input line 13.

Operation at the full operating speed will then continue, until a further request of speed change is originated, e.g. from the filling machine 14 (as discussed above).

The speed adaptation solution is further discussed with reference to the flow chart of Figure 4.

This solution envisages a preliminary step 50, at which the main control unit 18 of the blowing machine 12 enables the speed change (indeed, there may be operating conditions in which change of the operating speed of the blowing machine 12 is not allowed).

At step 51, a speed change is requested (e.g. by the filling machine 14), for example a reduction from the full, or nominal, operating speed to the reduced operating speed.

In response to this request, at step 52, the main control unit 18 of the blowing machine 12 blocks preform feeding into the oven 15, so that the number of preforms in the blowing machine 12 starts to decrease.

When the blowing machine 12 is empty, the production speed is changed to the new value, e.g. the reduced value, at step 53; in particular, both main control units 18, 28 of the blowing and filling machines 12, 14 control the respective electric motors 17, 26 to modify the respective rotation speed.

At step 54, main control unit 18 of the blowing machine 12 automatically applies a change to the operating parameters (e.g. to the heating parameters of the oven 15), corresponding to the changed rotation speed; in particular, the operating parameters corresponding to the modified production speed are retrieved from the memory 18'.

Then, at step 56, the same main control unit 18 of the blowing machine 12 causes the release of preforms, so that the number of preforms in the blowing machine 12 starts again to increase.

Combined operation of the blowing and filling machines 12, 14 then occur at the modified operating speed, with preforms being continuously fed to the blowing machine 12 for formation of the containers, until a new request of change of speed is received, so that operation returns at step 51.

According to a further aspect of the present solution, at start-up of the operation of the combined container-processing plant 10, or at a restart thereof, a preliminary time interval with a reduced production speed is envisaged. This may be advantageous, for example, to avoid that the product, which may initially be too warm, causes foam formation.

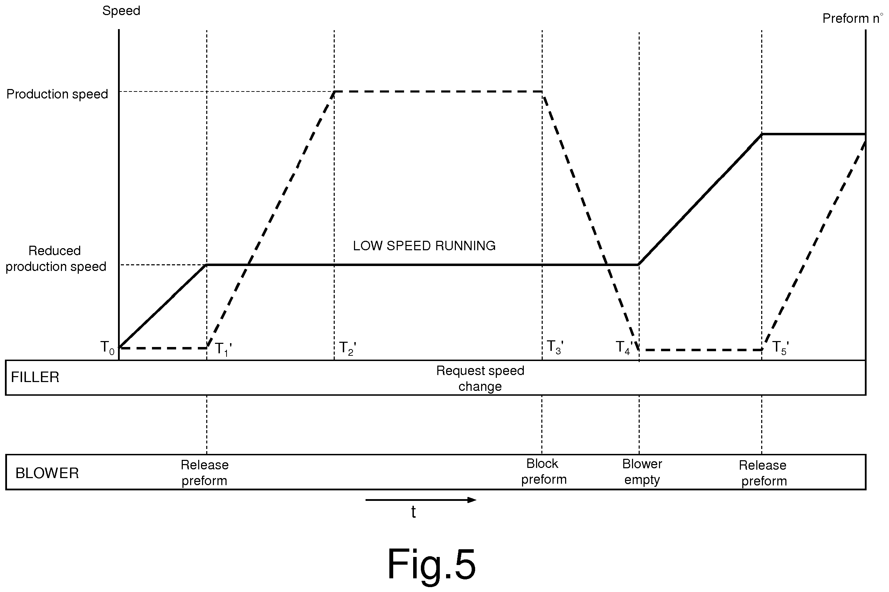

As shown in figure 5, at an initial, or starting time T0, the production speed starts to increase, from a zero speed initial condition, reaching the value of the reduced production speed at time T1'.

Within the same time T1', the main control unit 18 of the blowing machine 12 retrieves from memory 18' the operating parameters associated to the reduced operating speed, and applies the same operating parameters, e.g. the heating parameters for operation of the oven 15.

Next, at the same time T1', the main control unit 18 of the blowing machine 12 causes release of the preforms, that thus enter the blowing machine 12 and particularly the oven 15, as a continuous and uninterrupted flow. The number of preforms in the blowing machine 12 thus raises again and reaches the maximum value, at time T2'.

Starting from time T1', combined operation of the blowing machine 12 and the filling machine 14 thus occurs at the reduced production speed, with a continuous feed of preforms into the blowing machine 12, from the input line 13.

Operation at the reduced production speed then continues, until a request of speed change is originated, e.g. from the filling machine 14, this request of speed change being a request to modify the production speed from the reduced operating speed to the full operating speed. This request may be originated after a predetermined time from the start of the operation of the combined container-processing plant 10 from the zero-speed condition.

The main control unit 18 of the blowing machine 12 reacts to this request, blocking feeding of the preforms to the oven 15, at time T3'.

Due to blocking of the preforms, the number of preforms in the oven 15 again decreases from the maximum value and becomes zero at time T4', when the blowing machine 12 is empty.

At the same time T4', the matched production speed of the blowing and filling machines 12, 14, controlled by both main control units 18, 28 of the same blowing and filling machine 12, 14, starts to increase from the reduced production speed towards the full production speed, which is again reached at time T5'.

Within the same time T5', the main control unit 18 of the blowing machine 12 retrieves from memory 18' the operating parameters associated to the full production speed, and applies the same operating parameters to operation of the same blowing machine 12.

Next, at the same time T5', the main control unit 18 of the blowing machine 12 causes release of the preforms, that thus enter the blowing machine 12 and particularly the oven 15, as a further continuous and uninterrupted flow. The number of preforms in the blowing machine 12 thus raises again until it reaches the maximum value (as it is not shown in Figure 5).

Starting from time T5', combined operation of the blowing machine 12 and the filling machine 14 thus occurs at the full operating speed, with a continuous feed of preforms into the blowing machine 12, from the input line 13 (until a further request of change of speed is again generated).

The advantages that the described solution allows to achieve are clear from the foregoing description.

In any case, it is again underlined that this solution allows to achieve automatic adaptation of the rotation speed of the blowing machine 12 and the filling machine 14.

In particular, the intervention of an operator is not required, whenever a change of the production speed is to be achieved, e.g. due to an increase in the temperature of the product in the filling pipes.

Moreover, feeding of batches of preforms is not required, since the blowing machine 12 is in this case configured to perform the container-forming operations not only at the full, or nominal, operating speed, but also at a modified, e.g. reduced, operating speed.

Accordingly, preforms are continuously fed to the blowing machine 12, even during operation at the reduced production speed, thus achieving a smoother and more efficient operation of the combined container-processing plant 10.

The discussed solution thus allows to improve the throughput of the combined container-processing plant 10.

Finally it is clear that modifications and variations may be applied to the system described and shown, without departing from the scope defined by the appended claims.

In particular, more than two heating recipes (or set of operating parameters) could be stored in the memory 18' of the main control unit 18 of the blowing machine 12, to allow the same blowing machine 12 to perform the container-forming operations at more than two different production speeds, e.g. at the full operating speed and at two or more further production speeds, which may have any desired value.

Moreover, it is underlined that the discussed solution may be applied also for speed adaptation of different machines, or of a greater number of machines, in case the combined container-processing plant includes further processing machines, such as a sterilizing machine, a labelling machine and/or a capping machine, in addition to the blowing and filling machines.

## Claims

1. A combined container-processing plant (10) comprising a container-forming machine (12) and a container-filling machine (14) operatively coupled to the container-forming machine (12), the container-forming machine (12) and the container-filling machine (14) having a respective rotating wheel, or carousel (16, 25), controlled by a respective control unit (18, 28) to rotate around a respective rotation axis (A, B) at synchronized production speed, while performing respective container-processing operations;
**characterized in that** the container-forming machine (12) and the container-filling machine (14) are controlled to rotate at a full production speed, in a first operating condition, and at least at a first reduced production speed, in a second operating condition; the container-forming machine (12) being configured to perform container-forming operations both at the full production speed and at the first reduced production speed.

2. The combined container-processing plant according to claim 1, wherein the container-forming machine (12) is a blow-moulding machine configured to blow containers from preforms; wherein the container-forming operations performed by the container-forming machine (12) envisage, both at the full production speed and at the first reduced production speed: continuously receiving preforms from an input line (13), heating the preforms, and forming the containers by blow-moulding of the received preforms.

3. The combined container-processing plant according to claim 1 or 2, wherein the container-filling machine (14) is configured to generate a first request of speed change, and the control unit (18) of the container-forming machine (12) is configured, in response to the first request of speed change, to modify operating parameters of the container-forming machine (12), to allow container-forming operations being performed at the first reduced production speed.

4. The combined container-processing plant according to claim 3, wherein the control unit (18) of the container-forming machine (12) has a memory (18'), storing modified operating parameters of the container-forming machine (12) for the container-forming operations being performed at the first reduced production speed.

5. The combined container-processing plant according to claim 3 or 4, wherein the container-forming machine (12) comprises a heating module (15) having a number of heating units, configured to receive preforms and to heat the preforms; wherein the operating parameters include a temperature and/or a number of active heating units of the heating module (15).

6. The combined container-processing plant according to any of claims 3-5, wherein the container-filling machine (14) is configured to generate a second request of speed change, after the first request, and the control unit (18) of the container-forming machine (12) is configured, in response to the second request of speed change, to further modify operating parameters of the container-forming machine (12), to allow container-forming operations being performed again at the full production speed.

7. The combined container-processing plant according to any of claims 2-6, wherein the control unit (18) of the container-forming machine (12), at the occurrence of the second operating condition when the first reduced production speed is required, is configured to: block the preforms from the input line (13); when the container-forming machine (12) is empty from the preforms, control modification of the production speed from the full production speed to the first reduced production speed; and release the preforms from the input line (13) so as to perform the container-forming operations at the reduced production speed.

8. The combined container-processing plant according to any of claims 2-7, wherein the container-forming machine (12) is configured, in the second operating condition, to perform the container-forming operations at the first reduced production speed on preforms continuously received from the input line (13) .

9. The combined container-processing plant according to any of the preceding claims, wherein the container-forming machine (12) and the container-filling machine (14) are controlled to: rotate at the first reduced production speed at start-up or at restart from a stop at zero-speed; and to rotate at the full production speed after a time-interval has elapsed from the start-up or restart; wherein the container-forming machine (12) is configured to perform container-forming operations at the first reduced production speed during said time-interval.

10. A method of operating a container-processing plant (10) comprising a container-forming machine (12) and a container-filling machine (14) operatively coupled to the container-forming machine (12), the container-forming machine (12) and the container-filling machine (14) having a respective rotating wheel, or carousel (16, 25); the method comprising controlling rotation of the respective carousel (16, 25) of the container-forming machine (12) and container-filling machine (14) around a respective rotation axis (A, B) at synchronized production speed, while performing respective container-processing operations;
wherein controlling comprises controlling rotation of the respective carousel (16, 25) of the container-forming machine (12) and container-filling machine (14) at a full production speed, in a first operating condition, and at least at a first reduced production speed, in a second operating condition; further comprising, performing, by the container-forming machine (12), container-forming operations both at the full production speed and at the first reduced production speed.

11. The method according to claim 10, wherein the container-forming machine (12) is a blow-moulding machine configured to blow containers from preforms; wherein the container-forming operations performed by the container-forming machine (12) envisage, both at the full production speed and at the first reduced production speed: continuously receiving preforms from an input line (13), heating the preforms, and forming the containers by blow-moulding of the received preforms.

12. The method according to claim 10 or 11, comprising: by the container-filling machine (14), generating a first request of speed change; and, by the container-forming machine (12), in response to the first request of speed change, modifying operating parameters of the container-forming machine (12), to allow container-forming operations being performed at the first reduced production speed.

13. The method according to claim 12, further comprising, by the container-forming machine (12), retrieving from a memory (18') stored modified operating parameters of the container-forming machine (12) for the container-forming operations being performed at the first reduced production speed.

14. The method according to claim 12 or 13, wherein the container-forming machine (12) comprises a heating module (15) having a number of heating units, configured to receive preforms and to heat the preforms; wherein the operating parameters include a temperature and/or a number of active heating units of the heating module (15).

15. The method according to any of claims 12-14, further comprising: by the container-filling machine (14), generating a second request of speed change, after the first request; and, by the container-forming machine (12), in response to the second request of speed change, modifying operating parameters of the container-forming machine (12), to allow container-forming operations being performed again at the full production speed.

16. The method according to any of claims 11-15, comprising, by the container-forming machine (12) at the occurrence of the second operating condition when the first reduced production speed is required: blocking the preforms from the input line (13); when the container-forming machine (12) is empty from the preforms, controlling modification of the production speed from the full production speed to the first reduced production speed; and releasing the preforms from the input line (13) so as to perform the container-forming operations at the reduced production speed.

17. The method according to any of claims 11-16, comprising, by the container-forming machine (12), in the second operating condition, performing the container-forming operations at the first reduced production speed on continuously received preforms from the input line (13).

18. The method according to any of the claims 10-17, further comprising, by the container-forming machine (12) and the container-filling machine (14): rotating at the first reduced production speed at start-up or at restart from a stop at zero-speed; and rotating at the full production speed after a time-interval has elapsed from the restart; wherein performing, by the container-forming machine (12), container-forming operations, includes performing container-forming operations at the first reduced production speed during said time-interval.

## Patentansprüche

1. Kombinierte Behälterverarbeitungsanlage (10), umfassend eine Behälterformmaschine (12) und eine mit der Behälterformmaschine (12) betriebsmäßig gekoppelte Behälterfüllmaschine (14), wobei die Behälterformmaschine (12) und die Behälterfüllmaschine (14) jeweils ein rotierendes Rad oder Karussell (16, 25) aufweisen, die jeweils durch eine Steuereinheit (18, 28) gesteuert wird, um sich jeweils mit synchronisierter Produktionsgeschwindigkeit um eine jeweilige Rotationsachse (A, B) zu drehen, während sie jeweils Behälterverarbeitungsvorgänge durchführen;
**dadurch gekennzeichnet, dass**
die Behälterformmaschine (12) und die Behälterfüllmaschine (14) dazu gesteuert werden, in einem ersten Betriebszustand mit einer vollen Produktionsgeschwindigkeit und in einem zweiten Betriebszustand mit mindestens einer ersten reduzierten Produktionsgeschwindigkeit zu drehen; wobei die Behälterformmaschine (12) dazu ausgelegt ist, Behälterformvorgänge sowohl mit der vollen Produktionsgeschwindigkeit als auch mit der ersten reduzierten Produktionsgeschwindigkeit durchzuführen.

2. Kombinierte Behälterverarbeitungsanlage gemäß Anspruch 1, wobei die Behälterformmaschine (12) eine Blasformmaschine ist, die zum Blasen von Behältern aus Vorformlingen ausgelegt ist; wobei die durch die Behälterformmaschine (12) durchgeführten Behälterformvorgänge sowohl mit der vollen Produktionsgeschwindigkeit als auch mit der ersten reduzierten Produktionsgeschwindigkeit Folgendes vorsehen: kontinuierliches Empfangen von Vorformlingen aus einer Zufuhrlinie (13), Erwärmen der Vorformlinge und Formen der Behälter durch Blasformen der empfangenen Vorformlinge.

3. Kombinierte Behälterverarbeitungsanlage gemäß Anspruch 1 oder 2, wobei die Behälterfüllmaschine (14) dazu ausgelegt ist, eine erste Geschwindigkeitsänderungsanforderung zu erzeugen, und die Steuereinheit (18) der Behälterformmaschine (12) dazu ausgelegt ist, als Reaktion auf die erste Geschwindigkeitsänderungsanforderung Betriebsparameter der Behälterformmaschine (12) zu ändern, um das Durchführen von Behälterformvorgängen mit der ersten reduzierten Produktionsgeschwindigkeit zu ermöglichen.

4. Kombinierte Behälterverarbeitungsanlage gemäß Anspruch 3, wobei die Steuereinheit (18) der Behälterformmaschine (12) einen Speicher (18') aufweist, der geänderte Betriebsparameter der Behälterformmaschine (12) für die Behälterformvorgänge speichert, die mit der ersten reduzierten Produktionsgeschwindigkeit durchgeführt werden.

5. Kombinierte Behälterverarbeitungsanlage gemäß Anspruch 3 oder 4, wobei die Behälterformmaschine (12) ein Heizmodul (15) mit einer Anzahl von Heizeinheiten umfasst, das dazu ausgelegt ist, Vorformlinge zu empfangen und die Vorformlinge zu erwärmen; wobei die Betriebsparameter eine Temperatur und/oder eine Anzahl von aktiven Heizeinheiten des Heizmoduls (15) enthalten.

6. Kombinierte Behälterverarbeitungsanlage gemäß Anspruch 3-5, wobei die Behälterfüllmaschine (14) dazu ausgelegt ist, eine zweite Geschwindigkeitsänderungsanforderung nach der ersten Anforderung zu erzeugen, und die Steuereinheit (18) der Behälterformmaschine (12) dazu ausgelegt ist, als Reaktion auf die zweite Geschwindigkeitsänderungsanforderung Betriebsparameter der Behälterformmaschine (12) weiter zu ändern, um das Durchführen von Behälterformvorgängen wieder mit der vollen Produktionsgeschwindigkeit zu ermöglichen.

7. Kombinierte Behälterverarbeitungsanlage gemäß einem der Ansprüche 2-6, wobei die Steuereinheit (18) der Behälterformmaschine (12) beim Auftreten der zweiten Betriebszustand, wenn die erste reduzierte Produktionsgeschwindigkeit erforderlich ist, dazu ausgelegt ist: die Vorformlinge aus der Zufuhrlinie (13) zu blockieren; wenn die Behälterformmaschine (12) keine Vorformlinge enthält, eine Änderung der Produktionsgeschwindigkeit von der vollen Produktionsgeschwindigkeit auf die erste reduzierte Produktionsgeschwindigkeit zu steuern; und die Vorformlinge aus der Zufuhrlinie (13) freizugeben, um die Behälterformvorgänge mit der reduzierten Produktionsgeschwindigkeit durchzuführen.

8. Kombinierte Behälterverarbeitungsanlage gemäß einem der Ansprüche 2 bis 7, wobei die Behälterformmaschine (12) dazu ausgelegt ist, im zweiten Betriebszustand die Behälterformvorgänge mit der ersten reduzierten Produktionsgeschwindigkeit an kontinuierlich aus der Zufuhrlinie (13) empfangenen Vorformlingen durchzuführen.

9. Kombinierte Behälterverarbeitungsanlage gemäß einem der vorhergehenden Ansprüche, wobei die Behälterformmaschine (12) und die Behälterfüllmaschine (14) dazu gesteuert werden: beim Anfahren oder beim Wiederanfahren aus einem Stillstand mit Null-Geschwindigkeit mit der ersten reduzierten Produktionsgeschwindigkeit zu drehen; und nach Ablauf eines Zeitintervalls nach dem Anfahren oder Wiederanfahren mit der vollen Produktionsgeschwindigkeit zu drehen; wobei die Behälterformmaschine (12) dazu ausgelegt ist, während dieses Zeitintervalls Behälterformvorgänge mit der ersten reduzierten Produktionsgeschwindigkeit durchzuführen.

10. Verfahren zum Betreiben einer Behälterverarbeitungsanlage (10), umfassend eine Behälterformmaschine (12) und eine mit der Behälterformmaschine (12) betriebsmäßig gekoppelte Behälterfüllmaschine (14), wobei die Behälterformmaschine (12) und die Behälterfüllmaschine (14) jeweils ein rotierendes Rad oder Karussell (16, 25) aufweisen; wobei das Verfahren das Steuern der Drehung des jeweiligen Karussells (16, 25) der Behälterformmaschine (12) und der Behälterfüllmaschine (14) um eine jeweilige Drehachse (A, B) mit synchronisierter Produktionsgeschwindigkeit umfasst, während jeweilige Behälterverarbeitungsvorgänge durchgeführt werden;
wobei das Steuern das Steuern der Drehung des jeweiligen Karussells (16, 25) der Behälterformmaschine (12) und der Behälterfüllmaschine (14) in einem ersten Betriebszustand mit einer vollen Produktionsgeschwindigkeit und in einem zweiten Betriebszustand mindestens mit einer ersten reduzierten Produktionsgeschwindigkeit umfasst; ferner umfassend das Durchführen von Behälterformvorgängen durch die Behälterformmaschine (12) sowohl mit der vollen Produktionsgeschwindigkeit als auch mit der ersten reduzierten Produktionsgeschwindigkeit.

11. Verfahren gemäß Anspruch 10, wobei die Behälterformmaschine (12) eine Blasformmaschine ist, die zum Blasen von Behältern aus Vorformlingen ausgelegt ist; wobei die durch die Behälterformmaschine (12) durchgeführten Behälterformvorgänge sowohl mit der vollen Produktionsgeschwindigkeit als auch mit der ersten reduzierten Produktionsgeschwindigkeit vorsehen: kontinuierliches Empfangen von Vorformlingen aus einer Zufuhrlinie (13), Erwärmen der Vorformlinge und Formen der Behälter durch Blasformen der empfangenen Vorformlinge.

12. Verfahren gemäß Anspruch 10 oder 11, umfassend: Erzeugen einer ersten Geschwindigkeitsänderungsanforderung durch die Behälterfüllmaschine (14); und Ändern von Betriebsparametern der Behälterformmaschine (12) durch die Behälterformmaschine (12) als Reaktion auf die erste Geschwindigkeitsänderungsanforderung, um das Durchführen von Behälterformvorgängen mit der ersten reduzierten Produktionsgeschwindigkeit zu ermöglichen.

13. Verfahren gemäß Anspruch 12, ferner umfassend das Abrufen von gespeicherten geänderten Betriebsparametern der Behälterformmaschine (12) aus einem Speicher (18') für die Behälterformvorgänge, die mit der ersten reduzierten Produktionsgeschwindigkeit durchgeführt werden, durch die Behälterformmaschine (12).

14. Verfahren gemäß Anspruch 12 oder 13, wobei die Behälterformmaschine (12) ein Heizmodul (15) mit einer Anzahl von Heizeinheiten umfasst, das dazu ausgelegt ist, Vorformlinge zu empfangen und die Vorformlinge zu erwärmen; wobei die Betriebsparameter eine Temperatur und/oder eine Anzahl von aktiven Heizeinheiten des Heizmoduls (15) umfassen.

15. Verfahren gemäß einem der Ansprüche 12-14, ferner umfassend: Erzeugen einer zweiten Geschwindigkeitsänderungsanforderung durch die Behälterfüllmaschine (14) nach der ersten Anforderung; und Ändern von Betriebsparametern der Behälterformmaschine (12) durch die Behälterformmaschine (12) als Reaktion auf die zweite Geschwindigkeitsänderungsanforderung, um das Durchführen von Behälterformvorgängen wieder mit der vollen Produktionsgeschwindigkeit zu ermöglichen.

16. Verfahren gemäß einem der Ansprüche 11-15, umfassend, durch die Behälterformmaschine (12) bei Auftreten der zweiten Betriebszustand, wenn die erste reduzierte Produktionsgeschwindigkeit erforderlich ist: Blockieren der Vorformlinge aus der Zufuhrlinie (13); wenn die Behälterformmaschine (12) keine Vorformlinge enthält, Steuern der Änderung der Produktionsgeschwindigkeit von der vollen Produktionsgeschwindigkeit auf die erste reduzierte Produktionsgeschwindigkeit; und Freigeben der Vorformlinge aus der Zufuhrlinie (13), um die Behälterformvorgänge mit der reduzierten Produktionsgeschwindigkeit durchzuführen.

17. Verfahren gemäß einem der Ansprüche 11-16, umfassend das Durchführen der Behälterformvorgänge im zweiten Betriebszustand mit der ersten reduzierten Produktionsgeschwindigkeit an kontinuierlich empfangenen Vorformlingen aus der Zufuhrlinie (13) durch die Behälterformmaschine (12).

18. Verfahren gemäß einem der Ansprüche 10-17, ferner umfassend durch die Behälterformmaschine (12) und die Behälterfüllmaschine (14): Drehen mit der ersten reduzierten Produktionsgeschwindigkeit beim Anfahren oder beim Wiederanfahren aus einem Stillstand mit Null-Geschwindigkeit; und Drehen mit der vollen Produktionsgeschwindigkeit, nachdem ein Zeitintervall nach dem Wiederanfahren verstrichen ist; wobei das Durchführen von Behälterformvorgängen durch die Behälterformmaschine (12) während dieses Zeitintervalls das Durchführen von Behälterformvorgängen mit der ersten reduzierten Produktionsgeschwindigkeit enthält.

## Revendications

1. Installation combinée de traitement de contenant (10) comprenant une machine de formation de contenant (12) et une machine de remplissage de contenant (14) fonctionnellement couplée à la machine de formation de contenant (12), la machine de formation de contenant (12) et la machine de remplissage de contenant (14) ayant une roue rotative respective, ou un carrousel (16, 25), commandé par une unité de commande respective (18, 28) pour entrer en rotation autour d'un axe de rotation respectif (A, B) à une vitesse de production synchronisée, tout en réalisant des opérations respectives de traitement de contenant ;
**caractérisée en ce que**
la machine de formation de contenant (12) et la machine de remplissage de contenant (14) sont commandées pour entrer en rotation à une vitesse de production maximale, dans une première condition de fonctionnement, et au moins à une première vitesse de production réduite, dans une seconde condition de fonctionnement ; la machine de formation de contenant (12) étant configurée pour réaliser des opérations de formation de contenant à la fois à la vitesse de production maximale et à la première vitesse de production réduite.

2. Installation combinée de traitement de contenant selon la revendication 1, dans laquelle la machine de formation de contenant (12) est une machine de moulage par soufflage configurée pour souffler des contenants à partir de préformes ; dans laquelle les opérations de formation de contenant réalisées par la machine de formation de contenant (12) envisagent, à la fois à la vitesse de production maximale et à la première vitesse de production réduite : la réception continue de préformes à partir d'une ligne d'entrée (13), le chauffage des préformes, et la formation des contenants par moulage par soufflage des préformes reçues.

3. Installation combinée de traitement de contenant selon la revendication 1 ou 2, dans laquelle la machine de remplissage de contenant (14) est configurée pour générer une première demande de changement de vitesse, et l'unité de commande (18) de la machine de formation de contenant (12) est configurée, en réponse à la première demande de changement de vitesse, pour modifier des paramètres de fonctionnement de la machine de formation de contenant (12), pour permettre des opérations de formation de contenant réalisées à la première vitesse de production réduite.

4. Installation combinée de traitement de contenant selon la revendication 3, dans laquelle l'unité de commande (18) de la machine de formation de contenant (12) a une mémoire (18'), stockant des paramètres de fonctionnement modifiés de la machine de formation de contenant (12) pour les opérations de formation de contenant réalisées à la première vitesse de production réduite.

5. Installation combinée de traitement de contenant selon la revendication 3 ou 4, dans laquelle la machine de formation de contenant (12) comprend un module de chauffage (15) ayant un nombre d'unités de chauffage, configurées pour recevoir des préformes et pour chauffer les préformes ; dans laquelle les paramètres de fonctionnement incluent une température et/ou un nombre d'unités de chauffage actives du module de chauffage (15).

6. Installation combinée de traitement de contenant selon l'une quelconque des revendications 3 à 5, dans laquelle la machine de remplissage de contenant (14) est configurée pour générer une seconde demande de changement de vitesse, après la première demande, et l'unité de commande (18) de la machine de formation de contenant (12) est configurée, en réponse à la seconde demande de changement de vitesse, pour modifier de façon supplémentaire des paramètres de fonctionnement de la machine de formation de contenant (12), pour permettre des opérations de formation de contenant réalisées à nouveau à la vitesse de production maximale.

7. Installation combinée de traitement de contenant selon l'une quelconque des revendications 2 à 6, dans laquelle l'unité de commande (18) de la machine de formation de contenant (12), lors de la survenue de la seconde condition de fonctionnement lorsque la première vitesse de production réduite est requise, est configurée pour : bloquer les préformes provenant de la ligne d'entrée (13) ; lorsque la machine de formation de contenant (12) est vide des préformes, commander une modification de la vitesse de production, de la vitesse de production maximale à la première vitesse de production réduite ; et libérer les préformes à partir de la ligne d'entrée (13) afin de réaliser les opérations de formation de contenant à la vitesse de production réduite.

8. Installation combinée de traitement de contenant selon l'une quelconque des revendications 2 à 7, dans laquelle la machine de formation de contenant (12) est configurée, dans la seconde condition de fonctionnement, pour réaliser les opérations de formation de contenant à la première vitesse de production réduite sur des préformes reçues en continu à partir de la ligne d'entrée (13) .

9. Installation combinée de traitement de contenant selon l'une quelconque des revendications précédentes, dans laquelle la machine de formation de contenant (12) et la machine de remplissage de contenant (14) sont commandées pour : entrer en rotation à la première vitesse de production réduite au démarrage ou au redémarrage après un arrêt à une vitesse nulle ; et pour entrer en rotation à la vitesse de production maximale après qu'un intervalle de temps s'est écoulé depuis le démarrage ou le redémarrage ; dans laquelle la machine de formation de contenant (12) est configurée pour réaliser des opérations de formation de contenant à la première vitesse de production réduite durant ledit intervalle de temps.

10. Procédé de fonctionnement d'une usine de traitement de contenant (10) comprenant une machine de formation de contenant (12) et une machine de remplissage de contenant (14) fonctionnellement couplée à la machine de formation de contenant (12), la machine de formation de contenant (12) et la machine de remplissage de contenant (14) ayant une roue rotative respective, ou un carrousel (16, 25) ; le procédé comprenant la commande de la rotation du carrousel respectif (16, 25) de la machine de formation de contenant (12) et de la machine de remplissage de contenant (14) autour d'un axe de rotation respectif (A, B) à une vitesse de production synchronisée, tout en réalisant des opérations respectives de traitement de contenant ;
dans lequel la commande comprend la commande de la rotation du carrousel respectif (16, 25) de la machine de formation de contenant (12) et de la machine de remplissage de contenant (14) à une vitesse de production maximale, dans une première condition de fonctionnement, et au moins à une première vitesse de production réduite, dans une seconde condition de fonctionnement ; comprenant en outre, la réalisation, par la machine de formation de contenant (12), d'opérations de formation de contenant à la fois à la vitesse de production maximale et à la première vitesse de production réduite.

11. Procédé selon la revendication 10, dans lequel la machine de formation de contenant (12) est une machine de moulage par soufflage configurée pour souffler des contenants à partir de préformes ; dans lequel les opérations de formation de contenant réalisées par la machine de formation de contenant (12) envisagent, à la fois à la vitesse de production maximale et à la première vitesse de production réduite : la réception continue de préformes à partir d'une ligne d'entrée (13), le chauffage des préformes, et la formation des contenants par moulage par soufflage des préformes reçues.

12. Procédé selon la revendication 10 ou 11, comprenant : par la machine de remplissage de contenant (14), la génération d'une première demande de changement de vitesse ; et, par la machine de formation de contenant (12), en réponse à la première demande de changement de vitesse, la modification de paramètres de fonctionnement de la machine de formation de contenant (12), pour permettre des opérations de formation de contenant réalisées à la première vitesse de production réduite.

13. Procédé selon la revendication 12, comprenant en outre, par la machine de formation de contenant (12), la récupération, à partir d'une mémoire (18'), de paramètres de fonctionnement modifiés stockés de la machine de formation de contenant (12) pour les opérations de formation de contenant réalisées à la première vitesse de production réduite.

14. Procédé selon la revendication 12 ou 13, dans lequel la machine de formation de contenant (12) comprend un module de chauffage (15) ayant un nombre d'unités de chauffage, configurées pour recevoir des préformes et pour chauffer les préformes ; dans lequel les paramètres de fonctionnement incluent une température et/ou un nombre d'unités de chauffage actives du module de chauffage (15).

15. Procédé selon l'une quelconque des revendications 12-14, comprenant en outre : par la machine de remplissage de contenant (14), la génération d'une seconde demande de changement de vitesse, après la première demande ; et,
par la machine de formation de contenant (12), en réponse à la seconde demande de changement de vitesse, la modification de paramètres de fonctionnement de la machine de formation de contenant (12), pour permettre des opérations de formation de contenant réalisées à nouveau à la vitesse de production maximale.

16. Procédé selon l'une quelconque des revendications 11-15, comprenant, par la machine de formation de contenant (12), lors de la survenue de la seconde condition de fonctionnement lorsque la première vitesse de production réduite est requise : le blocage des préformes provenant de la ligne d'entrée (13) ; lorsque la machine de formation de contenant (12) est vide des préformes, la commande d'une modification de la vitesse de production, de la vitesse de production maximale à la première vitesse de production réduite ; et la libération des préformes à partir de la ligne d'entrée (13) afin de réaliser les opérations de formation de contenant à la vitesse de production réduite.

17. Procédé selon l'une quelconque des revendications 11 à 16, comprenant, par la machine de formation de contenant (12), dans la seconde condition de fonctionnement, la réalisation des opérations de formation de contenant à la première vitesse de production réduite sur des préformes reçues en continu à partir de la ligne d'entrée (13).

18. Procédé selon l'une quelconque des revendications 10 à 17, comprenant en outre, par la machine de formation de contenant (12) et la machine de remplissage de contenant (14) : la mise en rotation à la première vitesse de production réduite au démarrage ou au redémarrage après un arrêt à une vitesse nulle ; et la mise en rotation à la vitesse de production maximale après qu'un intervalle de temps s'est écoulé depuis le redémarrage ; dans lequel la réalisation, par la machine de formation de contenant (12), d'opérations de formation de contenant inclut la réalisation d'opérations de formation de contenant à la première vitesse de production réduite durant ledit intervalle de temps.
